(19) Europäisches Patentamt
European Patent Office
Office européen des brevets

(11) **EP 1 364 760 B2**

(12) **NEW EUROPEAN PATENT SPECIFICATION**
After opposition procedure

(45) Date of publication and mention
of the opposition decision:
**13.12.2017 Bulletin 2017/50**

(45) Mention of the grant of the patent:
**25.06.2008 Bulletin 2008/26**

(21) Application number: **02011247.0**

(22) Date of filing: **22.05.2002**

(51) Int Cl.:
***B29B 9/14*** *(2006.01)*

(54) **Emission-reduced articles from longfiber reinforced polypropylene**

Emissionsreduzierter Artikel aus mit langen Glasfasern verstärktem Polypropylen

Articles en polypropylène renforcé de fibres de verre longues donnant une émission réduite

(84) Designated Contracting States:
**AT BE CH CY DE DK ES FI FR GB GR IE IT LI LU MC NL PT SE TR**

(43) Date of publication of application:
**26.11.2003 Bulletin 2003/48**

(73) Proprietor: **Borealis Technology Oy**
**06101 Porvoo (FI)**

(72) Inventors:
• **Zopf, Ernst**
**St Georgen (AT)**
• **Stadlbauer, Wolfram**
**4292 Kefermarkt (AT)**
• **Stockreiter, Wolfgang**
**4040 Linz (AT)**
• **Prokschi, Herman**
**4231 Untergaisbach (AT)**
• **Kastner, Erwin**
**4040 Linz (AT)**
• **Huber, Peter**
**4323 Münzbach (AT)**
• **Blauhut, Wilfried**
**4040 Linz (AT)**

(74) Representative: **Maiwald Patentanwalts GmbH**
**Elisenhof**
**Elisenstrasse 3**
**80335 München (DE)**

(56) References cited:
EP-A- 0 628 596     EP-A- 0 663 418
NL-C- 1 010 646     US-A1- 2002 052 440

## Description

Longfiber reinforced polypropylenes (LFP) show a combination of advantageous properties, first of all, good mechanical properties, which are accompanied by low density, little cost and it has processing properties, which makes it applicable for mass production by molding, e.g. injection molding and to a lesser extent for extrusion processes. Because of these properties longfiber reinforced polypropylenes are widely applied in automobile applications.

However, there are some conceivable applications for which LFP so far have not been used or only to a small extent because of one or several of the disadvantages of LFP. One major problem in this regard are the emission properties of LFP.

A key aspect in the production of LFP is contacting the fibers with the polypropylene, i.e. the wetting (or impregnating) of the fiber with polypropylene. In order to achieve thoroughly wetted fibers and because the mechanical properties of LFP are mostly determined by the fibers themselves and their interconnection, it is common to use polypropylene with reduced molecular weight and thus reduced viscosity. The product and processing properties which are achieved are sufficient for most of the requirements of todays applications.

However, there are also products where it is tried to solve the problem of reduced viscosity by not impregnating the fibers with polymer at all, but by applying a high amount of sizing when the fibers are produced and thereby glueing the fibers together. The glued fibers are then coated with polymer.

Such products are inexpensive, but are characterised by insufficient mechanical properties, by unsatisfying optical properties of parts produced therefrom and by high emissions.

The length of the fibers is also of considerable importance. The longer the fibers are, i.e. the farther the fibers can transport and dissipate forces acting upon them, the better the mechanical properties are. This is especially valid for complex mechanical properties, e.g. biaxial impact behaviour.

US-A-2002/52440 discloses long glass fiber reinforced resin materials for molding. EP-A-663418 and EP-A-628596 disclose glass fiber reinforced resin materials.

For producing polymer material with long fibers in granular form, fibers are impregnated with polymers or polypropylenes in a pultrusion process and then the obtained strands are cut in a pelletiser to lengths of up to a few centimeters.

The lowering of the molecular weight results in a considerable amount of low-molecular components and degradation products. Their molecular weight may be so low that - especially upon exposure to thermal influence - they are set free and released to the surroundings, e.g. into the interior of the car.

Some of these emitted volatile substances can cause the so-called "fogging", which is the formation of a milky precipitate and which can - on the windscreen - have negative influence on the vision, especially under counterlight conditions. Also, the odour of these emitted substances is normally rather unpleasant if not hazardous for health.

LFP according to prior art are therefore hardly used for the car-interior.

The following effects are measured:

*Fogging*: according to DIN 75201. The optical effect is measured during the procedure on a glass surface and the changed reflection behaviour of the surface is determined.

*Odour*: is determined according to company standards. Samples are stored for some time under defined conditions, e.g. pressure of water and increased temperature, in closed containers. The odour is evaluated by several probands by assigning marks.

*Volatile Content*: is determined as emission of organic compounds according to company standards. Samples are stored for some time at elevated temperature and the gas above the sample is analysed quantitatively by gas chromatography.

The volatile content contributes to both the other effects, fogging and odour. The success of the present invention is therefore measured as the reduction of the volatile content.

## Object of the invention

It is therefore the object of the present invention to provide articles from a LFP which show a reduced emission behaviour compared to products known from the prior art.

This object is achieved with the granules according to claim 1 and the use as defined in claims 2 to 8.

The invention provides the use of granules which are comprised of long fiber reinforced polypropylene, the granules being obtained by first contacting reinforcing fibers, preferably in the shape of an endless roving, with a molten first polypropylene having an MFR of $\geq$ 35 g/10 min and then coating the impregnated fibers with a molten second polypropylene having an MFR ≤ 80 g/10 min, thereby forming a strand of fiber reinforced polypropylene and subsequently cutting the strand into granules, whereby the amounts of fiber and of first and second polypropylene are selected for the granules to have a fiber content of from 2 to 30 vol% and where the granules - in a cross-sectional view - have a two-layer-structure, preferably a core-sheath-structure, where the inner layer is comprised of the reinforcing fibers being impregnated with the first polypropylene which has an MFR which is at least 2 times the MFR of the second polypropylene, which comprises the outer layer, for producing articles with improved emission behaviour having an emission value of ≤ 60 μg/g, the articles being produced by a moulding or extrusion process.

The invention is also directed to granules which are comprised of long fiber reinforced polypropylene, the granules being obtained by first contacting reinforcing fibers, preferably in the shape of an endless roving, with a molten first polypropylene having an MFR of from 100 to 150 g/10 min and then coating the impregnated fibers with a molten second polypropylene being a propylene homopolymer having an MFR of from 0.2 to 60 g/10 min, thereby forming a strand of fiber reinforced polypropylene and subsequently cutting the strand into granules, whereby the amounts of fiber and of first and second polypropylene are selected for the granules to have a fiber content of from 2 to 30 vol% and where the granules - in a cross-sectional view - have a two-layer-structure, preferably a core-sheath-structure, where the inner layer is comprised of the reinforcing fibers being impregnated with the first polypropylene which has an MFR which is at least 2 times the MFR of the second polypropylene, which comprises the outer layer.

The polypropylene which is used for the present invention encompasses propylene homo- and copolymers. Blends of propylene homo- and copolymers with homo- and copolymers of ethylene and/or $C_4$-$C_8$ - $\alpha$-olefins and mixtures of any of the aforementioned polymers can also be used. The propylene copolymers comprise copolymers of propylene with ethylene and/or $C_4$-$C_8$ - $\alpha$-olefins.

The necessary amount of first polypropylene depends upon the used impregnating process and is at least the same as the volume of the used fibers and usually up to about the double volume of the used fibers.

The amounts of the first and second polypropylene and of the fibers are selected in order to result in a fiber content of the granules of 2 - 30 vol%, preferably 5 - 20 vol% and most preferably 10 - 15 vol%.

The articles may be produced by a moulding or extrusion process, e.g. injection moulding, compression moulding, blow moulding, injection compression moulding or any kind of extrusion process.

With regard to the use of the present invention as second polypropylene a polypropylene having an MFR of ≤ 80 g/10 min is used for the present invention, it is however preferred that the polypropylene has an MFR of ≤ 60 g/10 min, where an MFR of smaller than about 55 g/10 min is still more preferred for producing granules and articles therefrom having an improved emission behaviour.

According to a preferred embodiment of the present invention the first polypropylene has an MFR which is at least 2.5 times the MFR of the second polypropylene, the MFR of the second polypropylene being ≤ 60 g/10 min, where the produced articles have an emission value of ≤ 50 μg/g.

With regard to the use of the present invention in an even more preferred embodiment the first polypropylene has an MFR of from 100 - 150 g/10 min and the outer layer is comprised of a propylene homopolymer with an MFR of from 0.2 - 60 g/10 min, where the produced articles have an emission value of ≤ 40 μg/g.

Articles with particularly good mechanical properties can be achieved with the above granules.

The granules consist of a core of fibers which are impregnated with polypropylene and of a polypropylene-coating which is essentially fiber-free. Only the impregnating polypropylene has to be treated in order to be able to thoroughly impregnate the fibers.

As the coating polypropylene which encloses the impregnated fibers, a polypropylene is used which has low emission values. Such coating polypropylenes have a high molecular weight and high viscosity and are therefore unsuitable for achieving good impregnation of untreated fibers.

For achieving good impregnation, low emissions and good mechanical properties the polypropylene of the inner layer shall have an MFR which is at least 2-times higher than the MFR of the polypropylene of the outer layer. It is however preferred for the MFR of the polypropylene of the inner layer to be at least 2.5 times higher than the MFR of the polypropylene of the outer layer.

The present invention therefore includes the reduction of emission values in LFP's by using a combination of polypropylenes which together have less emissions than the polypropylene used in conventional LFP's and where the polypropylene with the higher molecular weight could not have been used as impregnating polypropylene in conventional LFP's.

Emission values herein are related to the article produced from the granules. The unit μg/g means microgram carbon emitted per gram of article.

Processes for producing a fiber-reinforced thermoplast with a two-layer-structure are known.

The WO 99/65661 discloses such a process and the impregnating tool used for the process. It is disclosed that several additives are added to the coating polymer. Some of these additives would however again cause emission-related smell problems.

EP 0342080 discloses a similar process where fibers are first impregnated with a polymer containing a coupling agent and are then coated with a polymer which is to be reinforced.

None of the above documents discloses anything about the problems related to emissions of organic compounds or gives any hint as to how this problem might be solved.

The present invention is applicable to granules where the inner and outer layer are either comprised of different or identical polypropylenes or mixtures which have only a part of the components in common.

A wide array of fibers can be used as reinforcing fibers, e.g. glassfibers, carbon fibers, aramidfibers, metallic fibers and fibers from organic polymers having melting or decomposition temperature of > 240 °C, e.g. polyester, regenerated cellulose, e.g. "Rayon", natural fibers, e.g. hemp, sisal, jute, cotton, flax. Glass is the preferred reinforcing fiber material.

Surprisingly, granules with the aforementioned structure and composition are not only suitable for producing articles with very low emission values, but also with excellent mechanical parameters. Particularly, injection-moulded articles with tensile moduli $\geq$ 6000 MPa and even $\geq$ 6500 MPa, notched impact strength $\geq$ 20 kJ/m$^2$ and even $\geq$ 25 kJ/m$^2$ and unnotched impact strength $\geq$ 50 kJ/m$^2$ can be produced from granules with a glass fiber content of 10-15 vol%, a ratio of the volumes of first polypropylene to glass fibers of 2:1 and an MFR-ratio of first to second polypropylene of at least 2:1.

### Description of measurement methods

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Tensile test

Tensile test was performed according to ISO 527-3. **Tensile modulus (E-modulus)** was also determined according to ISO 527-3.

### Impact strength

The notched impact strength was determined according to ISO 179 / 1eA at 23 °C and at -20 °C by using injection moulded test specimens as described in EN ISO 1873-2 (80 x 10 x 4 mm).

The unnotched impact strength was determined according to ISO 179 / 1eU at 23 °C and at -20 °C by using injection moulded test specimens as described in EN ISO 1873-2 (80 $\times$ 10 $\times$ 4 mm).

### Glass Fiber Content

Glass fiber content was determined according to ISO 1172.

### Emission Value

Emission values were determined according to the hereinafter disclosed internal company standard of Borealis GmbH for determining emissions of organic compounds from nonmetallic materials.

Procedure

The emission potential is measured on the basis of the sum of all values provided by the emitted substances after gas chromatography analysis and flame ionization detection. Sample introduction is by headspace analysis after conditioning at 120 °C.

• Specimen preparation

The samples (2000+/-0,1mg) are cut off from the moulded specimen (80 x 10 x 4mm) without increasing the temperature of the specimen (24h after moulding, stored at room temperature). The samples are weighed in a head space vial (20ml). The vial is sealed gas-tight using a Teflon-coated septum facing the inside of the vial.

• Test equipment

Gas chromatograph (Hewlett-Packard Typ 5890 Serie II) for use with capillary columns with head space sampling valve, flame ionization detector (FID) and computer/integrator.
Column: Optima 5; 30m x 0,32mm x 5$\mu$m from Machery-Nagel
Headspacesampler HP 7694

• Measuring conditions

| GC: | oven temperature program | | 4 min. isothermal at 50 °C |
| --- | --- | --- | --- |
| | | | heating to 200 °C with a rate of 10K/min |
| | | | heating to 250 °C with a rate of 20K/min |
| | | | 8.5 min. Isothermal at 250 °C |
| | Injector temperature | | 250 °C |
| | Detector temperature | | 350 °C |
| | Injectionvolume: | | 3ml |
| | Flow: | 10ml/min headspace | |
| | | 2ml/min column | |
| | | Split ratio 1:5 | |
| | Carrier gas: | Helium (6.0) | |

| Headspaceautosampler HP 7694: | | |
| --- | --- | --- |
| 3ml Loop | | |
| temperatures: oven: 120 °C, Loop: 125 °C, Transfer-Line: 130 °C | | |
| vial-EQ. Time: | standard: 60min, | sample: 300min |

• Test procedure

Prior to measurement the vials are conditioned in the air above the sample for 5 hours $\pm$ 5 minutes at 120 °C $\pm$ 1 °C in the head space sampling valve in order to enrich the vial with the substances contained in the sample; immediately afterwards the vials are analyzed. At least 2 samples are analyzed.

The blank value is determined by calculating the mean value taking signal values from 3 measurements with empty vials.

Dosage is identical for all sample analyses, blank value and calibrating solution.

• Calibration

Calibrating characteristics acc. to the external standards method are drawn up for quantitative determination of total carbon emission.

Acetone serves as calibrating substance for total carbon emission.

General calibration for acetone requires the preparation of 7 calibration solutions with 5; 25; 50; 250; 500; 2500 and 5000mg acetone per 50ml in n-butanol. Prior to check calibration it is to be ensured that there are no peaks occurring for n-butanol and acetone at the same time.

All substances used during calibration have at least reagent-grade quality.

For calibration measurement, 4 $\mu$l $\pm$ 0.04 $\mu$l per 20 ml vial volume are sprayed into an empty uncovered head space vial using a 5 $\mu$l syringe.

The calibration samples are conditioned for 1 hour at 120 °C in the head space sampling valve and then analysed acc. to the general test specifications; the temperature program set for the gas chromatograph can be stopped after solvent elution. At least 3 measurements shall be performed per calibration solution.

Plotting the determined surfaces of the respective calibration substance against the concentrations of the calibrating solutions (in g/l) yields a compensating curve; the curve gradient represents the calibrating factor k(G) from the total emission. This shall be achieved by applying the minimum error square method. The correlation coefficient k shall be higher than 0,995.

• Evaluation

The data recorded by the gas chromatograph shall provide the total peak surface as well as the peak surfaces of the individual substances.

For calculating the total peak surface, only the following peaks shall be used:

- peaks with a height three times the noise value at the base line
  and
- peaks with a surface greater than 10 % of the acetone peak surface in the calibration solution with 0.5 g/l concentration.

The limit of detection of this method for analysis shall provide a peak surface and height smaller than 10 % of the respective value that is yielded for acetone when analyzing a calibration solution with a 0.5 g/l acetone concentration. The desired total carbon emission values $E_G$ are derived from the measuring results using the total peak surface provided by sample analysis and the calibrating factor k(G) from acetone calibration

$$E_g = \frac{total\ \ peak\ surface - blank\ value\ peak\ surface}{k(G)}\ x\ 2\ x\ 0.6204$$

The unit is μgC/g (μg carbon per g of sample)

Factor 2 is created by the reference to "g sample" and is due to the fact that 2 g of the sample but 4μl of the calibrating solution is filled into the 20 ml vial.

Factor 0.6204 denotes the weight per cent of carbon in acetone.

The mentioned results are mean values from 2 measurements.

Emission values were determined as total carbon emission $E_G$ and calculated as μg Carbon per g Sample.

**Examples**

**Example 1**

Three Glass rovings (Grade: RO99 1200 P319 DI, commercially available from Saint-Gobain Vetrotex France S.A.) were impregnated using an impregnating tool according to EP 0 397 505 B1 with a propylene homopolymer (MFR: 125 g/10 min; polymer grade: HK060AE from Borealis GmbH). The impregnated rovings were combined and processed through a coating die where they were coated with a second propylene homopolymer (MFR: 55 g/10 min; polymer grade: HJ320MO from Borealis GmbH). Thus a glassfiber reinforced strand having a two-layer structure was produced having a glass fiber content of 30 wt%, a content of impregnating polymer of 25 wt% and a content of coating polymer of 45 wt%. The strand was produced with a speed of 25 m/min and was immediately after production pulled through a water bath with a length of approximately 4 m. The cooled strand was then dried for a distance of about 5 m. The dried strand was then processed through a pelletiser where it was cut into granules with a length of 10 mm.

From the granules a test bar with dimensions 80 x 10 x 4 mm (according to ISO 294 type B iso mould) was injection moulded on a Ferromatik-Milacron FM 60 with the following conditions: mass temperature: 250 °C; mould temperature: 40 °C; injection speed: 200 mm/s; injection time: 1.5 s; holding pressure 30 bar for 20 s, then 20 bar for 5 s; cooling time: 45 s; cycle time: 55 s.

A sample of 2 g from this test bar was subjected to emission testing according to the previously described Borealis internal company standard. An emission value of 36 μg/g was measured.

Examples 2 to 5 have been performed with different coating polymers which are all available from Borealis GmbH.

The characteristics of the produced articles from examples 1 to 5 are shown in table 1.

**Table 1**

| | | Example | | | | |
|---|---|---|---|---|---|---|
| | | **1** | **2** | **3** | **4** | **5** |
| | | | | | | |
| Impregnating polymer | | HK060AE | | | | |
| amt. of impreg. polym. | wt% | 25 | | | | |

(continued)

| | | Example | | | | |
|---|---|---|---|---|---|---|
| | | **1** | **2** | **3** | **4** | **5** |
| MFR | g/10 min | 125 | | | | |
| | | | | | | |
| coating polymer | | HJ320MO | HH245FB | HG245FB | HD120MO | BHC5003 |
| amt. of coating polym. | | 45 | | | | |
| MFR | g/10 min | 55 | 35 | 25 | 7 | 0.3 |
| | | | | | | |
| tensile modulus | [MPa] | 7200 | 7600 | 7700 | 7400 | 6600 |
| tensile strength | [MPa] | 131 | 132 | 133 | 128 | 110 |
| strain at yield | [%] | 2.5 | 2.3 | 2.2 | 2.5 | 2.5 |
| | | | | | | |
| IS (ISO 179/ 1eU) | [kJ/m$^2$] | 62 | 59 | 60 | 56 | 57 |
| NIS (ISO 179/ 1eA) | [kJ/m$^2$] | 30 | 25 | 28 | 26 | 23 |
| | | | | | | |
| glass fibers | wt% | 30.2 | 31.1 | 30.8 | 31.0 | 30.4 |
| | | | | | | |
| emission of test bar | $\mu$g/g | 36 | 35 | 29 | 22 | 18 |
| IS ... Impact Strength NIS ... Notched Impact Strength | | | | | | |

The respective amounts of impregnating polymer, coating polymer and glass fiber are preset at production time to 25, 45 and 30 wt%, respectively.

The amount of glass fibers given in table 1 is the actual amount which was determined on the produced articles.

**Claims**

1. Granules which are comprised of long fiber reinforced polypropylene, the granules being obtained by first contacting reinforcing fibers, preferably in the shape of an endless roving, with a molten first polypropylene having an MFR of from 100 to 150 g/10 min and then coating the impregnated fibers with a molten second propylene homopolymer having an MFR of from 0.2 to 60 g/10 min, thereby forming a strand of fiber reinforced polypropylene and subsequently cutting the strand into granules, whereby the amounts of fiber and of first and second polypropylene are selected for the granules to have a fiber content of from 2 to 30 vol% and where the granules - in a cross-sectional view - have a two-layer-structure, preferably a core-sheath-structure, where the inner layer is comprised of the reinforcing fibers being impregnated with the first polypropylene which has an MFR which is at least 2 times the MFR of the second polypropylene, which comprises the outer layer.

2. Use of granules which are comprised of long fiber reinforced polypropylene, the granules being obtained by first contacting reinforcing fibers, preferably in the shape of an endless roving, with a molten first polypropylene having an MFR of $\geq$ 35 g/10 min and then coating the impregnated fibers with a molten second polypropylene having an MFR $\leq$ 80 g/10 min, thereby forming a strand of fiber reinforced polypropylene and subsequently cutting the strand into granules, whereby the amounts of fiber and of first and second polypropylene are selected for the granules to have a fiber content of from 2 to 30 vol% and where the granules - in a cross-sectional view - have a two-layer-structure, preferably a core-sheath-structure, where the inner layer is comprised of the reinforcing fibers being impregnated with the first polypropylene which has an MFR which is at least 2 times the MFR of the second polypropylene, which comprises the outer layer, for producing articles with improved emission behaviour having an

emission value of $\leq 60$ $\mu$g/g, the articles being produced by a moulding or extrusion process.

3. Use according to claim 2, **characterised in that** the first polypropylene has an MFR which is at least 2.5 times the MFR of the second polypropylene, the MFR of the second polypropylene being $\leq 60$ g/10 min, where the produced articles have an emission value of $\leq 50$ $\mu$g/g.

4. Use according to one of claims 2 or 3, **characterised in that** the first polypropylene has an MFR of from 100 to 150 g/10 min and the outer layer is comprised of a propylene homopolymer with an MFR of from 0.2 to 60 g/10 min, where the produced articles have an emission value of $\leq 40$ $\mu$g/g.

5. Use according to any one of claims 2 to 4, **characterised in that** the polypropylenes comprise any one or mixtures of propylene homo- and copolymers and blends of propylene homo- and copolymers with $C_2$- and $C_4$ to $C_8$ $\alpha$-olefin homo- and copolymers.

6. Use according to any one of claims 2 to 5, **characterised in that** the inner and outer layer are comprised of different polypropylenes.

7. Use according to any one of claims 2 to 6, **characterised in that** the inner and outer layer are comprised of identical polypropylenes.

8. Use according to any one of claims 2 to 7, **characterised in that** the reinforcing fibers are selected from glass fibers, carbon fibers, aramid fibers, metallic fibers and fibers from organic polymers having a melting or decomposition temperature of > 240 °C, glass fibers being preferred.

**Patentansprüche**

1. Granulat, beinhaltend Langfaser-verstärktes Polypropylen, wobei das Granulat erhalten wird durch zuerst In-Kontakt-bringen von verstärkenden Fasern, bevorzugt in Form eines endlosen Faserstranges, mit einem geschmolzenen ersten Polypropylen, dass eine Schmelzflussrate von 100 bis 150 g/10 min hat und dann Beschichten der imprägnierten Faser mit einem geschmolzenem zweiten Polypropylenhomopolymer, dass eine Schmelzflussrate von 0,2 bis 60 g/10 min hat, wodurch ein Strang aus faserverstärktem Polypropylen ausgebildet wird und anschließendes Schneiden des Stranges zu Granulat, wobei die Mengen an Faser und an einem ersten und einem zweiten Polypropylen für das Granulat so ausgewählt sind, dass es einen Fasergehalt von 2 bis 30 Vol.-% hat und wobei das Granulat in einer Querschnittsansicht - eine Zweischichtstruktur hat, bevorzugt eine Kern-Mantel-Struktur, wobei die innere Schicht die verstärkenden Fasern beinhaltet, die mit dem ersten Polypropylen imprägniert sind, das eine Schmelzflussrate hat, die mindestens das 2-fache der Schmelzflussrate des zweiten Polypropylens beträgt, welches die äußere Schicht umfasst.

2. Verwendung von Granulat, beinhaltend Langfaser-verstärktes Polypropylen, wobei das Granulat erhalten wird durch zuerst In-Kontakt-bringen von verstärkenden Fasern, bevorzugt in Form eines endlosen Faserstranges, mit einem geschmolzenen ersten Polypropylen, dass eine Schmelzflussrate von $\geq 35$ g/10 min hat und dann Beschichten der imprägnierten Faser mit einem geschmolzenem zweiten Polypropylen, dass eine Schmelzflussrate von $\leq 80$ g/10 min hat, wodurch ein Strang aus faserverstärktem Polypropylen ausgebildet wird und anschließendes Schneiden des Stranges zu Granulat, wobei die Mengen an Faser und an einem ersten und einem zweiten Polypropylen für das Granulat so ausgewählt sind, dass es einen Fasergehalt von 2 bis 30 Vol.-% hat und wobei das Granulat in einer Querschnittsansicht - eine Zweischichtstruktur hat, bevorzugt eine Kern-Mantel-Struktur, wobei die innere Schicht die verstärkenden Fasern beinhaltet, die mit dem ersten Polypropylen imprägniert sind, das eine Schmelzflussrate hat, die mindestens das 2-fache der Schmelzflussrate des zweiten Polypropylens beträgt, welches die äußere Schicht umfasst, zur Herstellung von Gegenständen mit verbessertem Emissionsverhalten, die einen Emissionswert von $\leq 60$ $\mu$g/g haben, wobei die Gegenstände durch einen Formungs- und Extrusionsprozess hergestellt werden.

3. Verwendung gemäß Anspruch 2, **dadurch gekennzeichnet, dass** das erste Polypropylen eine Schmelzflussrate hat, die mindestens das 2,5-fache der Schmelzflussrate des zweiten Polypropylens beträgt, wobei die Schmelzflussrate des zweiten Polypropylens $\leq 60$ g/10 min ist, wobei die hergestellten Gegenstände einen Emissionswert von $\leq 50$ $\mu$g/g haben.

**4.** Verwendung gemäß einem der Ansprüche 2 oder 3, **dadurch gekennzeichnet, dass** das erste Polypropylen eine Schmelzflussrate von 100 bis 150 g/10 min hat und die äußere Schicht ein Propylenhomopolymer mit einer Schmelzflussrate von 0,2 bis 60 g/10 min beinhaltet, wobei die hergestellten Gegenstände einen Emissionswert von $\leq 40$ $\mu$g/g haben.

**5.** Verwendung gemäß einem der Ansprüche 2 bis 4, **dadurch gekennzeichnet, dass** die Polypropylene eines von oder Mischungen aus Propylen-homo- und -copolymersen und Blends von Propylen-homo- und -copolymeren mit $C_2$- und $C_4$-$C_8$- $\alpha$-Olefinhomo- und copolymeren umfassen.

**6.** Verwendung gemäß einem der Ansprüche 2 bis 5, **dadurch gekennzeichnet, dass** die innere und äußere Schicht verschiedene Polypropylene beinhaltet.

**7.** Verwendung gemäß einem der Ansprüche 2 bis 6, **dadurch gekennzeichnet, dass** die innere und äußere Schicht identische Polypropylene beinhaltet.

**8.** Verwendung gemäß einem der Ansprüche 2 bis 7, **dadurch gekennzeichnet, dass** die verstärkenden Fasern ausgewählt sind aus Glasfasern, Kohlefasern, Aramidfasern, metallischen Fasern und Fasern aus organischen Polymeren, die eine Schmelz- oder Zersetzungstemperatur von > 240 °C haben, wobei Glasfasern bevorzugt sind.

## Revendications

**1.** Granulés constitués de polypropylène renforcé par de longues fibres, les granulés étant obtenus d'abord par mise en contact de fibres de renforcement, de préférence sous la forme d'un stratifil sans fin, avec un premier polypropylène fondu présentant un indice de fusion (MFR) de 100 à 150 g/10 min et puis par revêtement des fibres imprégnées avec un second homopolymère de propylène fondu présentant un MFR de 0,2 à 60 g/10 min, ce qui forme ainsi un fil de base en polypropylène renforcé par des fibres, et ensuite par découpage du fil de base en granulés, les quantités de fibres et de premier et second polypropylènes étant choisies afin que les granulés présentent une teneur en fibres de 2 à 30 % en volume et les granulés - sur une vue en coupe - présentant une structure à deux couches, de préférence une structure coeur-gaine, dans laquelle la couche interne est constituée par les fibres de renforcement imprégnées du premier polypropylène qui présente un MFR qui est d'au moins 2 fois le MFR du second polypropylène, qui constitue la couche externe.

**2.** Utilisation de granulés constitués de polypropylène renforcé par de longues fibres, les granulés étant obtenus d'abord par mise en contact de fibres de renforcement, de préférence sous la forme d'un stratifil sans fin, avec un premier polypropylène fondu présentant un MFR > 35 g/10 min et puis par revêtement des fibres imprégnées avec un second polypropylène fondu présentant un MFR < 80 g/10 min, ce qui forme ainsi un fil de base en polypropylène renforcé par des fibres, et ensuite par découpage du fil de base en granulés, les quantités de fibres et de premier et second polypropylènes étant choisies afin que les granulés présentent une teneur en fibres de 2 à 30 % en volume et les granulés - sur une vue en coupe - présentant une structure à deux couches, de préférence une structure coeur-gaine, dans laquelle la couche interne est constituée par les fibres de renforcement imprégnées du premier polypropylène qui présente un MFR qui est d'au moins 2 fois le MFR du second polypropylène, qui constitue la couche externe, pour la production d'articles avec un comportement d'émission amélioré, présentant une valeur d'émission $\leq 60$ $\mu$g/g, les articles étant produits par un procédé de moulage ou d'extrusion.

**3.** Utilisation selon la revendication 2, **caractérisée en ce que** le premier polypropylène présente un MFR qui est d'au moins 2,5 fois le MFR du second polypropylène, le MFR du second polypropylène étant $\leq 60$ g/10 min, les articles produits présentant une valeur d'émission < 50 $\mu$g/g.

**4.** Utilisation selon l'une des revendications 2 et 3, **caractérisée en ce que** le premier polypropylène présente un MFR de 100 à 150 g/10 min et la couche externe est constituée par un homopolymère de propylène présentant un MFR de 0,2 à 60 g/10 min, les articles produits présentant une valeur d'émission < 40 $\mu$g/g.

**5.** Utilisation selon l'une quelconque des revendications 2 à 4, **caractérisée en ce que** les polypropylènes comprennent l'un quelconque parmi les homopolymères de propylène, les copolymères de propylène, ou leurs mélanges, et les mélanges d'homopolymères et de copolymères de propylène avec des homopolymères et copolymères d'a-oléfines en $C_2$ et en $C_4$ à $C_8$.

**6.** Utilisation selon l'une quelconque des revendications 2 à 5, **caractérisée en ce que** les couches interne et externe sont constituées de polypropylènes différents.

**7.** Utilisation selon l'une quelconque des revendications 2 à 6, **caractérisée en ce que** les couches interne et externe sont constituées de polypropylènes identiques.

**8.** Utilisation selon l'une quelconque des revendications 2 à 7, **caractérisée en ce que** les fibres de renforcement sont choisies parmi les fibres de verre, les fibres de carbone, les fibres d'aramide, les fibres métalliques et les fibres obtenues à partir de polymères organiques présentant un point de fusion ou de décomposition > 240°C, les fibres de verre étant celles préférées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200252440 A
- EP 663418 A
- EP 628596 A

- WO 9965661 A
- EP 0342080 A
- EP 0397505 B1